# EUROPEAN PATENT SPECIFICATION

(11) **EP 3 012 053 B1**
(45) Date of publication and mention of the grant of the patent: **20.09.2017**
(21) Application number: 15191326.6
(22) Date of filing: 23.10.2015
(51) Int. Cl.: B23D 47/04, B27B 31/00, B27B 5/065

(54) **MACHINE FOR CUTTING PANELS MADE OF WOOD, PLASTIC OR THE LIKE**
MASCHINE ZUM SCHNEIDEN VON PLATTEN AUS HOLZ, KUNSTSTOFF ODER DERGLEICHEN
MACHINE POUR DÉCOUPER DES PANNEAUX EN BOIS, EN PLASTIQUE OU SIMILAIRE

(30) Priority: 24.10.2014 IT BO20140592
(43) Date of publication of application: 27.04.2016
(73) Proprietor: BIESSE S.p.A., 61100 Pesaro (IT)
(72) Inventor: LATTANZI, Lorenzo, 61100 PESARO (IT)
(74) Representative: Manconi, Stefano

(56) References cited:
- EP-A1- 1 510 276
- EP-A2- 0 571 339
- BR-A2- PI0 904 723
- DE-A1- 3 716 651
- GB-A- 2 050 937

## Description

The present invention relates to a machine for cutting panels of wood, plastic or the like according to the preamble of claim 1. Such a machine is known from GB2050937A. The present invention finds particularly advantageous application in a cutting machine, to which the following description will make explicit reference without thereby losing generality.

In the field of the cutting of wood panels, it is known to provide a cutting machine comprising a base defining a substantially horizontal support table for at least one panel of wood or the like; a cutting station; at least one feeding device to feed the panel through the cutting station in a first direction parallel to the support table; and a cutting unit mounted in the cutting station and mobile in a second direction parallel to the support table and transverse to the first direction to cut the panel.

The machine further comprises a pressure device to lock the panel on the support table and to allow the cutting unit to cut the panel properly.

The feeding device normally comprises a carriage, which extends above the base in the second direction, and is provided with a plurality of panel holding and transporting members.

Each holding and transporting member comprises a lower jaw defining a support surface for the panel, an upper jaw mobile between a clamping position and a release position of the panel, and a limit-stop surface, which is formed between the lower jaw and the upper jaw to stop the panel in the first direction, and extends perpendicular to the support surface.

Since the upper jaw is slidingly engaged in a guide device perpendicular to the support surface and parallel to the limit-stop surface, the known machines to cut panels of the aforesaid type have some drawbacks, mainly deriving from the fact that said holding and transporting members are unable to ensure that the panel remains in contact with the relative limit-stop surfaces when the relative upper jaws are moved into their clamping positions.

The object of the present invention is to provide a machine to cut panels of wood, plastic or the like which is free from the drawbacks described above and which is simple and economical to implement.

According to the present invention, there is provided a machine for cutting panels of wood, plastic, or the like as defined in independent claim 1. Preferred embodiments of the machine are defined in the dependent claims. The present invention will now be described with reference to the accompanying drawings, which illustrate a non-limitative embodiment, in which:
Figure 1 is a schematic plan view, with parts removed for clarity's sake, of a preferred embodiment of the machine of the present invention;
Figure 2 is a schematic perspective view, with parts removed for clarity's sake, of a detail of the machine of Figure 1;
Figure 3 is a schematic side view, with parts in section and parts removed for clarity's sake, of the detail of Figure 2;
Figure 4 schematically shows the operating principle of the detail of Figures 2 and 3; and
Figures 5 and 6 schematically show two variations of the detail of Figures 2 and 3.

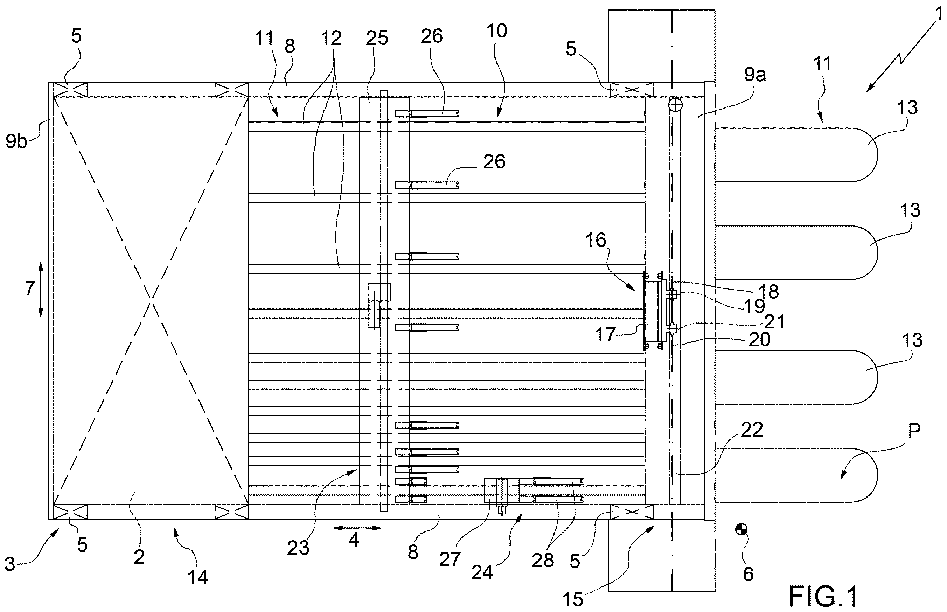

With reference to Figure 1, 1 indicates, as a whole, a machine to cut panels 2 of wood, plastic or the like, having a substantially rectangular shape.

The machine 1 comprises a portal frame 3, which is substantially parallelepiped-shaped with a rectangular base, extends in a horizontal direction 4, and is provided with four vertical corners, each defined by a respective upright 5 parallel to a vertical direction 6 transverse to the direction 4.

Each upright 5 is aligned to a corresponding upright 5 in the direction 4 and to a corresponding upright 5 in a horizontal direction 7 perpendicular to the directions 4 and 6.

Each upright 5 is connected with a corresponding upright 5 by means of a longitudinal guide member 8 fixed to the upper ends of the two uprights 5 parallel to the direction 4, and is connected with a corresponding upright 5 by means of a cross member 9 parallel to the direction 7.

The machine 1 further has a base 10, which is arranged beneath and inside the frame 3, and comprises two supporting devices 11 arranged on opposite sides of one of the cross members 9 (hereinafter indicated with 9a) in the direction 4.

The two devices 11 define, together with the upper face of the cross member 9a, a substantially horizontal support table P for the panels 2, and respectively comprise a plurality of roller bars 12 parallel to each other and to the direction 4, and four release tables 13 parallel to each other and to the direction 4.

The bars 12 extend between the cross member 9a and a station 14 for loading the panels 2 on the table P. The station 14 is formed inside the frame 3 starting from the cross member 9 (hereinafter indicated with 9b) opposite to the cross member 9a, and is configured to receive a stack of panels 2.

The machine 1 further comprises a cutting station 15, which is formed at the cross member 9a, and is provided with a cutting unit 16.

The unit 16 comprises a horizontal carriage 17, slidingly coupled to the cross member 9a to carry out rectilinear movements in the direction 7 with respect to the base 10 and under the thrust of a known and not shown actuating device.

The carriage 17 supports an incision blade 18 mounted to rotate about a respective longitudinal axis 19 parallel to the direction 4 and a cutting blade 20 mounted to rotate about a respective longitudinal axis 21 parallel to the direction 4.

The blades 18, 20 are moved by the carriage 17 in the direction 7 with a rectilinear reciprocating motion comprising a forward stroke, in which the blade 18, arranged before the blade 20 in the feeding direction 7 of the unit 16, incises the panel 2 arranged on the table P and the blade 20 cuts the panels 2, and a return stroke. The blades 18, 20 are further mobile with respect to the carriage 17 in the direction 6 between a lowered rest position, in which the blades 18, 20 are arranged below the table P to allow the advancement of the panels 2 along the table P, and a raised operating position, in which the blades 18, 20 protrude above the table P to cut the panels 2.

The unit 16 cooperates with a pressing device 22 of known type, which extends above the table P in the direction 7, and is mobile, with respect to the frame 3, in the direction 6 between a raised rest position and a lowered operating position, in which the panels 2 are locked on the table P and are cut by the unit 16 parallel to the direction 7.

The machine 1 further has, in this case, a main pusher 23 and a secondary pusher 24 configured to feed the panels 2 along the table P and through the station 15 either way up the direction 4.

The pusher 23 comprises a motorized carriage 25, which is mounted above the bars 12, extends between the two longitudinal members 8 in the direction 7 and supports a plurality of gripping members 26 distributed along the carriage 25 in the direction 7, and alternating with the bars 12.

The pusher 24 comprises a motorized carriage 27, which is coupled to one of the longitudinal members 8, is mounted above the bars 12, and supports, in this case, a pair of gripping members 28 alternating with the bars 12.

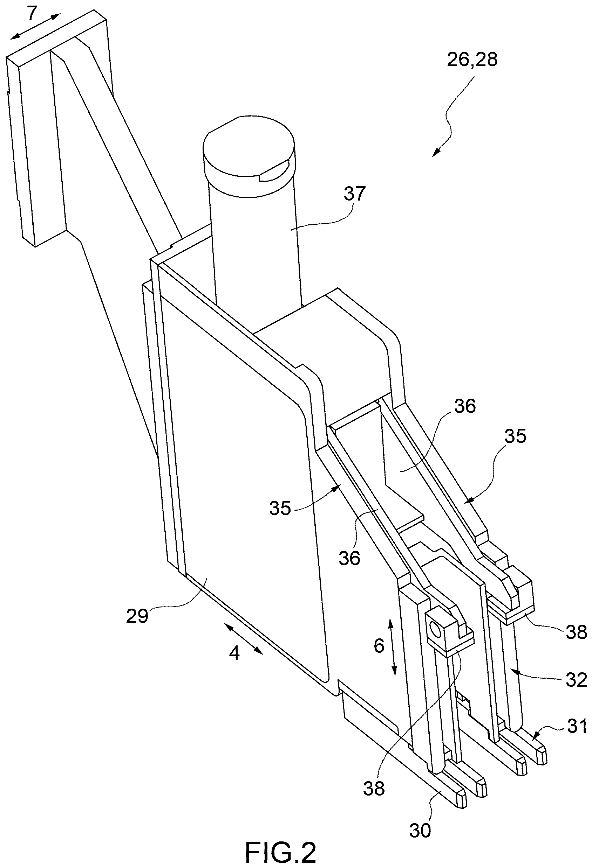

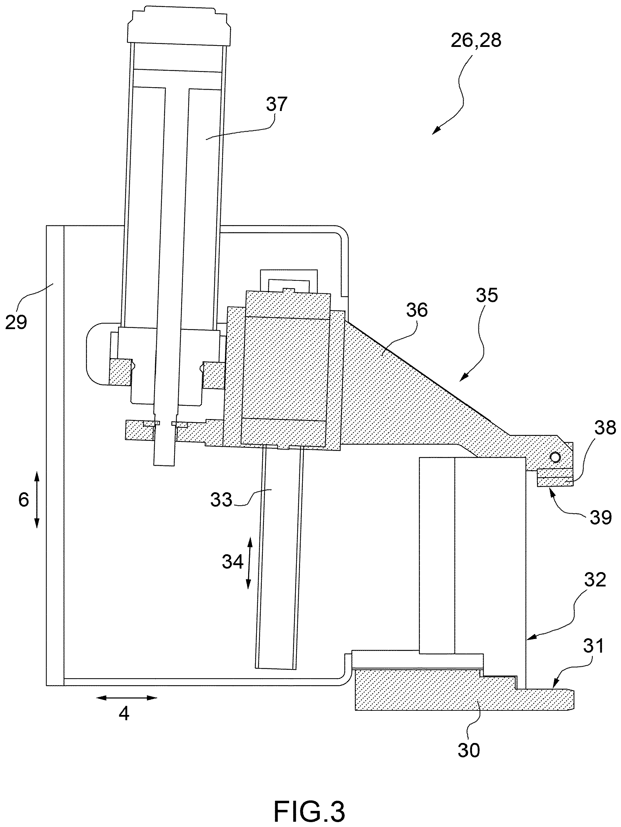

As illustrated in Figures 2 and 3, each member 26, 28 comprises a support frame 29 configured so as to allow the member 26, 28 to move, with respect to the corresponding carriage 25, 27, in the direction 7 and/or between a raised rest position and a lowered operating position.

The frame 29 supports a lower jaw 30 defining a support surface 31 substantially coplanar to the table P, and is configured so as to define a limit-stop surface 32 which extends upwardly from the surface 31, is substantially perpendicular to the direction 4, and allows to stop and correctly position the panel 2 in the direction 4.

The frame 29 further supports a rectilinear guide device 33 extending in a direction 34, which is inclined with respect to the direction 6, is arranged at an angle other than 90° with respect to the surface 31, and is arranged at an angle other than 0° with respect to the surface 32.

The member 26, 28 further comprises an upper jaw 35 mobile along the guide device 33 between a clamping position and a release position of the panel 2.

The jaw 35 comprises a sliding block 36 (in this case a sliding block 36 operating with friction or recirculating balls) slidingly coupled to the guide device 33 to carry out rectilinear movements along the guide device 33 in the direction 34 under the thrust of an actuator cylinder 37 fixed to the frame 29 parallel to the direction 34. According to a variant not shown, the cylinder 37 is hinged to the frame 29 to oscillate, with respect to the frame 29, around a pivot axis parallel to the direction 7.

The jaw 35 further comprises a buffer 38, which is made of an elastically deformable and compressible material, is fixed to the sliding block 36, and contacts the panel 2 when the jaw 35 is moved into the clamping position.

The buffer 38 contacts the panel 2 in correspondence with its own contact surface 39 extending, in this case, parallel to the surface 31.

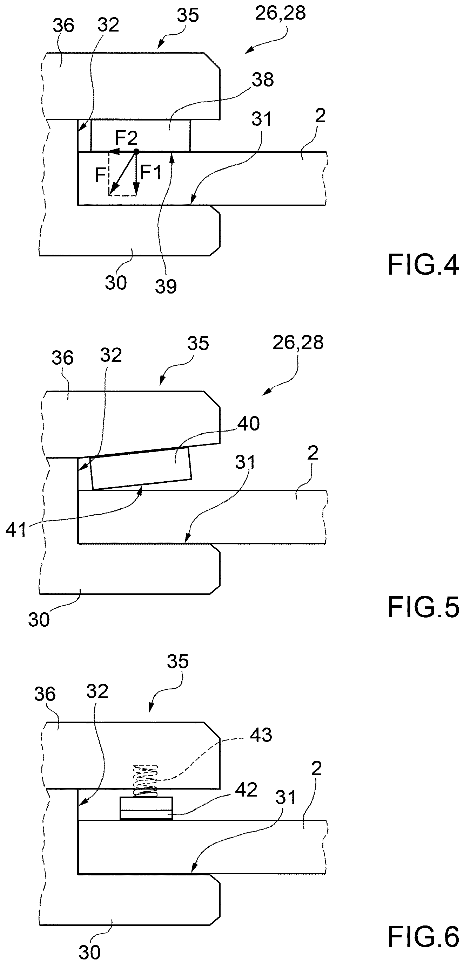

With reference to Figure 4, since the direction 34 of the guide device 33 is arranged at an angle smaller than 90° with respect to the surface 31, the jaw 35 exerts on the panel 2 a force F, which is parallel to the direction 34, and therefore comprises a vertical component F1 parallel to the direction 6 and a horizontal component F2 parallel to the direction 4 and directed toward the surface 32.

The orientation of the guide device 33 and of the direction 34 therefore allows to keep the panel 2 in contact with the surface 32 when the jaw 35 is moved into the clamping position.

The variant shown in Figure 5 differs from the one shown in Figure 3 only in that the buffer 38 is eliminated and replaced with a buffer 40 having a contact surface 41 inclined at an angle other than 0° relative to the surface 31, in particular diverging from the surface 31 starting from the surface 32.

The variant shown in Figure 6 differs from the one shown in Figure 3 only in that the buffer 38 is eliminated and replaced with a buffer 42 coupled to the sliding block 36 by interposing a spring 43.

According to a variant not shown, the guide device 33 is defined by a circular bar and the sliding block 36 is defined by a bushing fitted on the bar.

## Claims

1. A machine for cutting panels (2) made of wood, plastic or the like, the machine comprising support means (10) defining a support table (P) for at least one panel (2); a cutting station (15); at least one feeding device (23, 24) to feed the panel (2) through the cutting station (15) in at least one first direction (4) that is parallel to the support table (P); and a cutting unit (16), which is mounted in the cutting station (15) so as to cut or incise the panel (2); the feeding device (23, 24) comprising at least one holding and transporting member (28) comprising, in turn, a lower jaw (30) defining a support surface (31) for the panel (2), a guide device (33), an upper jaw (35), which is slidingly engaged in the guide device (33) so as to move between a panel (2) clamping position and a panel (2) release position, and a limit-stop surface (32), which is obtained between said lower and upper jaws (30, 35) so as to stop the panel (2) in the first direction (4) and extends perpendicular to the support surface (31); and being **characterized in that** the guide device (33) extends in a second direction (34) that is arranged at an angle other than 0° relative to the limit-stop surface (32) and other than 90° relative to the support surface (31).

2. A machine according to claim 1, wherein the upper jaw (35) has a contact surface (39) to get in contact with the panel (2); the contact surface (39) being parallel to the support surface (31).

3. A machine according to claim 1, wherein the upper jaw (35) has a contact surface (41) to get in contact with the panel (2); the contact surface (41) being inclined relative to the support surface (31).

4. A machine according to any of the previous claims, wherein the upper jaw (35) is provided with a compressible buffer (38; 40; 42), which is designed to get in contact with the panel (2) when the upper jaw (35) is arranged in its clamping position.

5. A machine according to any of the previous claims, wherein the upper jaw (35) comprises a sliding block (36), which is mobile along the guide device (33), a buffer (42), which is designed to get in contact with the panel (2) when the upper jaw (35) is in its clamping position, and at least one spring (43), which is interposed between the sliding block (36) and the buffer (42).

6. A machine according to any of the previous claims, wherein the holding and transporting member (28) further comprises an operating device (37) to move the upper jaw (35) along the guide device (33) between its clamping and release positions.

7. A machine according to claim 6, wherein the operating device (37) comprises an actuator cylinder, which is fixed to a frame (29) of the holding and transporting member (28) parallel to said second direction (34).

8. A machine according to claim 6, wherein the operating device (37) comprises an actuator cylinder, which is hinged to a frame (29) of the holding and transporting member (28).

9. A machine according to any of the previous claims, wherein the second direction (34) is arranged at an angle smaller than 90° relative to the support surface (31) of the lower jaw (30).

10. A machine according to any of the previous claims, wherein the guide device (33) is straight.

11. A machine according to any of the previous claims, wherein the upper jaw (35) comprises a sliding block (36) operating with friction or recirculating balls, which is slidingly coupled to the guide device (33).

12. A machine according to any of the previous claims, wherein the guide device (33) comprises at least one bar with a circular shape and the upper jaw (35) comprises a coupling bushing, which is slidingly arranged in the bar.

## Patentansprüche

1. Maschine zum Schneiden von Platten (2) aus Holz, Kunststoff oder dergleichen, wobei die Maschine ein Tragmittel (10) zum Definieren eines Tragtisches (P) für wenigstens eine Platte (2) umfasst; ferner eine Schneidstation (15); wenigstens eine Zufuhreinrichtung (23, 24), um die Platte (2) durch die Schneidstation (15) in wenigstens einer ersten Richtung (4), die parallel zu dem Tragtisch (P) ist, zuzuführen; und eine Schneideinheit (16), die in der Schneidstation (15) montiert ist, derart, dass sie die Platte (2) schneidet oder einschneidet; wobei die Zufuhreinrichtung (23, 24) wenigstens ein Halte- und Transportelement (28) umfasst, das wiederum eine untere Klemmbacke (30) umfasst, die eine Tragoberfläche (31) für die Platte (2) definiert, eine Führungseinrichtung (33), eine obere Klemmbacke (35), die gleitend an der Führungseinrichtung (33) angeschlossen ist, um sich zwischen einer die Platte (2) verklemmenden Position und einer die Platte (2) freigebenden Position zu bewegen, und eine Grenzanschlagoberfläche (32), die zwischen der genannten unteren und oberen Klemmbacke (30, 35) vorgesehen ist, um die Platte (2) in der ersten Richtung (4) zu stoppen, und die sich senkrecht zu der Tragoberfläche (31) erstreckt; **dadurch gekennzeichnet, dass** die Führungseinrichtung (33) sich in einer zweiten Richtung (34) erstreckt, die mit einem Winkel ungleich 0° relativ zu der Grenzanschlagoberfläche (32) und ungleich 90° relativ zu der Tragoberfläche (31) ausgerichtet ist.

2. Eine Maschine gemäß Anspruch 1, wobei die obere Klemmbacke (35) eine Kontaktoberfläche (39) aufweist, um in Kontakt mit der Platte (2) zu gelangen; wobei die Kontaktoberfläche (39) parallel zu der Tragoberfläche (31) ist.

3. Eine Maschine gemäß Anspruch 1, wobei die obere Klemmbacke (35) eine Kontaktoberfläche (41) aufweist, um in Kontakt mit der Platte (2) zu gelangen; wobei die Kontaktoberfläche (41) geneigt relativ zu der Tragoberfläche (31) ist.

4. Eine Maschine gemäß einem der vorhergehenden Ansprüche, wobei die obere Klemmbacke (35) mit einem kompressiblen Polster (38; 40; 42) versehen ist, das ausgeführt ist, um in Kontakt mit der Platte (2) zu gelangen, wenn die obere Klemmbacke (35) in ihrer Klemmposition ist.

5. Eine Maschine gemäß einem der vorhergehenden Ansprüche, wobei die obere Klemmbacke (35) einen Gleitblock (36) umfasst, der entlang der Führungseinrichtung (33) beweglich ist, ein Polster (42), das ausgeführt ist, um in Kontakt mit der Platte (2) zu gelangen, wenn die obere Klemmbacke (35) in ihrer Klemmposition ist, und wenigstens eine Feder (43), die zwischen dem Gleitblock (36) und dem Polster (42) vorgesehen ist.

6. Eine Maschine gemäß einem der vorhergehenden Ansprüche, wobei das Halte- und Transportelement (28) ferner eine Betätigungseinrichtung (37) umfasst, um die obere Klemmbacke (35) entlang der Führungseinrichtung (33) zwischen ihrer verklemmenden und ihrer lösenden Position zu bewegen.

7. Eine Maschine gemäß Anspruch 6, wobei die Betätigungseinrichtung (37) einen Aktuatorzylinder umfasst, der an einem Rahmen (29) des Halte- und Transportelements (28) parallel zu der genannten zweiten Richtung (34) befestigt ist.

8. Eine Maschine gemäß Anspruch 6, wobei die Betätigungseinrichtung (37) einen Aktuatorzylinder umfasst, der gelenkig an einem Rahmen (29) des Halte- und Transportelementes (28) angeschlossen ist.

9. Eine Maschine gemäß einem der vorhergehenden Ansprüche, wobei die zweite Richtung (34) mit einem Winkel kleiner als 90° relativ zu der Tragoberfläche (31) der unteren Klemmbacke (30) ausgerichtet ist.

10. Eine Maschine gemäß einem der vorhergehenden Ansprüche, wobei die Führungseinrichtung (33) gerade ist.

11. Eine Maschine gemäß einem der vorhergehenden Ansprüche, wobei die obere Klemmbacke (35) einen Gleitblock (36) umfasst, der mit Reibungs- oder Rezirkulationskugeln arbeitet, der gleitend an die Führungseinrichtung (33) gekoppelt ist.

12. Eine Maschine gemäß einem der vorhergehenden Ansprüche, wobei die Führungseinrichtung (33) wenigstens eine Stange mit einer kreisförmigen Form umfasst und die obere Klemmbacke (35) eine Kupplungshülse umfasst, die gleitend auf der Stange angeordnet ist.

## Revendications

1. Machine pour découper des panneaux (2) en bois, plastique ou similaire, la machine comprenant des moyens de support (10) définissant une table de support (P) pour au moins un panneau (2) ; un poste de découpe (15) ; au moins un dispositif d'alimentation (23, 24) pour alimenter le panneau (2) au travers du poste de découpe (15) dans au moins une première direction (4) qui est parallèle à la table de support (P) ; et une unité de découpe (16), qui est montée dans le poste de découpe (15) de sorte à découper ou inciser le panneau (2) ; le dispositif d'alimentation (23, 24) comprenant au moins un élément de maintien et de transport (28) comprenant, à son tour, une mâchoire inférieure (30) définissant une surface de support (31) pour le panneau (2), un dispositif de guidage (33), une mâchoire supérieure (35) qui est engagée par coulissement dans le dispositif de guidage (33) de sorte à se déplacer entre une position de serrage de panneau (2) et une position de libération de panneau (2), et une surface de butée limite (32), qui est obtenue entre lesdites mâchoires inférieure et supérieure (30, 35) de sorte à arrêter le panneau (2) dans la première direction (4) et s'étend perpendiculairement à la surface de support (31) ; et étant **caractérisée en ce que** le dispositif de guidage (33) s'étend dans une seconde direction (34) qui est agencée selon un angle autre que 0° par rapport à la surface de butée limite (32) et autre que 90° par rapport à la surface de support (31).

2. Machine selon la revendication 1, dans laquelle la mâchoire supérieure (35) présente une surface de contact (39) pour venir en contact avec le panneau (2) ; la surface de contact (39) étant parallèle à la surface de support (31).

3. Machine selon la revendication 1, dans laquelle la mâchoire supérieure (35) présente une surface de contact (1) pour venir en contact avec le panneau (2) ; la surface de contact (41) étant inclinée par rapport à la surface de support (31).

4. Machine selon l'une quelconque des revendications précédentes, dans laquelle la mâchoire supérieure (35) est dotée d'un tampon compressible (38 ; 40 ; 42), qui est conçu pour venir en contact avec le panneau (2) lorsque la mâchoire supérieure (35) est agencée dans sa position de serrage.

5. Machine selon l'une quelconque des revendications précédentes, dans laquelle la mâchoire supérieure (35) comprend un bloc coulissant (36), qui est mobile le long du dispositif de guidage (33), un tampon (42), qui est conçu pour venir en contact avec le panneau (2) lorsque la mâchoire supérieure (35) est dans sa position de serrage, et au moins un ressort (43) qui est interposé entre le bloc coulissant (36) et le tampon (42).

6. Machine selon l'une quelconque des revendications précédentes, dans laquelle l'élément de maintien et de transport (28) comprend en outre un dispositif de fonctionnement (37) pour déplacer la mâchoire supérieure (35) le long du dispositif de guidage (33) entre ses positions de serrage et de libération.

7. Machine selon la revendication 6, dans laquelle le dispositif de fonctionnement (37) comprend un cylindre actionneur qui est fixé à un cadre (29) de l'élément de maintien et de transport (28) parallèlement à ladite seconde direction (34).

8. Machine selon la revendication 6, dans laquelle le dispositif de fonctionnement (37) comprend un cylindre actionneur qui est articulé à un cadre (29) de l'élément de maintien et de transport (28).

9. Machine selon l'une quelconque des revendications précédentes, dans laquelle la seconde direction (34) est agencée selon un angle inférieur à 90° par rapport à la surface de support (31) de la mâchoire inférieure (30).

10. Machine selon l'une quelconque des revendications précédentes, dans laquelle le dispositif de guidage (33) est droit.

11. Machine selon l'une quelconque des revendications précédentes, dans laquelle la mâchoire supérieure (35) comprend un bloc coulissant (36) fonctionnant avec des billes de friction ou de recirculation, qui est couplé par coulissement au dispositif de guidage (33).

12. Machine selon l'une quelconque des revendications précédentes, dans laquelle le dispositif de guidage (33) comprend au moins une barre avec une forme circulaire et la mâchoire supérieure (35) comprend une douille de couplage, qui est agencée par coulissement dans la barre.
